# EUROPÄISCHE PATENTSCHRIFT

(11) **EP 3 504 136 B1**
(45) Veröffentlichungstag und Bekanntmachung des Hinweises auf die Patenterteilung: **17.02.2021**
(21) Anmeldenummer: 17771669.3
(22) Anmeldetag: 29.08.2017
(51) Int. Cl.: B65G 17/24, B65G 23/34, B65G 67/20

(54) **STAUROLLENKETTENFÖRDERER**
ACCUMULATING ROLLER CHAIN CONVEYER
TRANSPORTEUR D'ACCUMULATION À CHAÎNES ET À ROULEAUX

(30) Priorität: 29.08.2016 DE 102016116054
(43) Veröffentlichungstag der Anmeldung: 03.07.2019
(73) Patentinhaber: Schmitt Prof. Möhlmann & Collegen Wirtschaftskanzlei Insolvenzverwalter Aktiengesellschaft, 08056 Zwickau (DE)
(72) Erfinder: SCHMITT, Jens, 08056 Zwickau (DE); WOLFF, Marcus, 08056 Zwickau (DE)
(74) Vertreter: Schneiders & Behrendt Bochum
(86) Internationale Anmeldenummer: PCT/EP2017/071619
(87) Internationale Veröffentlichungsnummer: WO 2018/041810

(56) Entgegenhaltungen:
- EP-A2- 0 392 993
- DE-A1-102004 009 842
- DE-T2- 69 400 651
- DE-U1- 29 723 950
- FR-A- 1 213 111
- JP-U- S5 331 785
- US-A- 3 250 408

## Beschreibung

Die Erfindung betrifft einen Staurollenkettenförderer mit wenigstens einer Staurollenförderbahn, wenigstens einem in beide Richtungen drehenden Motor für jede Staurollenförderbahn und zwei Förderketten pro Staurollenförderbahn, wobei die Förderketten einer Staurollenförderbahn zumindest auf der Oberseite in Führungen verlaufen, über Zahnräder im Kreis geführt werden und synchron antreibbar sind. Eine solche Staurollenfördereinrichtung ist insbesondere für Sattelauflieger von Lastzügen, aber auch für Container, Eisenbahnwaggons, Frachtflugzeuge und dergleichen.

Staurollenkettenförderer für Fahrzeuge sind seit langem bekannt und werden vielfach für den Transport von Einbauteilen, beispielsweise in der Kraftfahrzeugindustrie, genutzt. Eine besondere Bedeutung haben sie mit dem "just in time" (JIT) und "just in sequence" (JIS) Konzepten erlangt, die die zeitgenaue Anlieferung von Einbauteilen für einen Produktionsprozess vorsehen.

Das Prinzip des Staurollenförderers beruht auf der automatischen Einförderung des Stauguts in einen Trailer, Waggon oder Container am Herstellungsort, den Transport zum Einsatzort in dem Transportmittel und das automatische Ausfördern und Zuleiten zum Produktionsprozess am Verarbeitungsort.

Bei einem typischen Staurollenförderer, wie er in der DE 10 2004 009 842 A1 beschrieben ist, ist an einem umlaufenden Gliederband eine Anzahl von Staurollen befestigt, auf denen beispielsweise das Staugut auf einer Palette aufliegt. Die Staurollen weisen einen definierten Rollwiderstand auf, in dessen Folge die Staurollen während des Transportvorganges feststehen und die Palette mitnehmen. Am Ende der Förderstrecke angekommen verharrt das Staugut in seiner Position, im Nachhinein eingefördertes Staugut schließt sich hinten an. Das Ausfördern am Zielort erfolgt in umgekehrter Reihenfolge.

Gemäß einer Variante weisen Staurollenförderer zwei in Führungen laufende Förderketten oder Zahnriemen auf, die mit Laufrollen verbunden sind. Das Staugut wird von den Staurollen getragen, die in Förderrichtung mehr oder weniger frei beweglich sind. Die Förderketten bzw. Zahnriemen werden von Motoren angetrieben, wobei entweder zwei Motoren für jede Förderrichtung oder ein umschaltbarer Motor für beide Förderrichtungen vorhanden sind.

Ein Staurollenkettenförderer gemäß Oberbegriff des Anspruchs 1 ist aus der EP 0 392 993 A2 bekannt.

Ein Problem der herkömmlichen Staurollenförderer ist der hohe Verschleiß aufgrund der Belastung sowie der Reibung an den Förderschienenführungen. Hinzukommt - auch durch die Belastungen bedingt - die Tendenz der Förderketten bzw. Zahnriemen, sich zu dehnen, d.h. in der Länge zu verändern. Solche Längenveränderungen treten in der Regel nicht gleichmäßig bei beiden Fördersträngen einer Staurollenfördereinrichtung auf und müssen aufwendig ausgeglichen werden. Zudem führen sie zu Reibungsverlusten und vorzeitigem Verschleiß. Wartungsarbeiten sind nur schwer durchzuführen, da die Rollen über die gesamte Länge des Förderers verbaut sind. Die seitliche Anordnung des Motors ist platzraubend.

Staurollenförderer können ferner über eine Königswelle und Riemchen angetrieben werden. Hier stellt die mangelnde Temperaturbeständigkeit und der dadurch bedingte schnelle Verschleiß der Riemchen ein Problem dar.

Entsprechend ist Aufgabe der Erfindung, eine robuste, wartungsfreundliche und gewichtsarme Konstruktionslösung für einen Staurollenförderer bereit zu stellen, der in einen Trailer, Container oder Waggon eingebaut werden kann und insbesondere auch platzsparend eingebaut und verschleißarm betrieben werden kann.

Diese Aufgabe wird mit einem Staurollenkettenförderer nach Anspruch1 gelöst.

Der erfindungsgemäße Staurollenkettenförderer weist einen Motor und wenigstens eine Staurollenförderbahn auf. Insbesondere im Sattelauflieger können mehrere solcher Staurollenkettenförderer, eingebaut werden, beispielsweise zwei oder drei nebeneinander und gegebenenfalls vier oder sechs in zwei Etagen.

Um übermäßige Kettenlängen zu vermeiden, etwa in Trailern oder Waggons, können zwei oder mehr Staurollenförderbahnen hintereinander geschaltet werden, die von einem gemeinsamen oder jeweils einem eigenen Motor angetrieben werden. Für diese Variante gelten die gleichen Merkmale und Prinzipien, wie sie hier dargestellt sind. Insbesondere sind alle Motoren am stirnseitigen Ende der Förderbahnen, etwa an der Stirnseite eines Trailers, angeordnet. Das stirnseitige Ende ist bei Reihenschaltung mehrerer Förderbahnen das Ende der Einförderstrecke.

Für jede Staurollenförderbahn ist wenigstens ein Motor vorgesehen, der in beide Richtungen dreht und damit als Antrieb der Förderbahn sowohl für das Einfördern als auch für das Ausfördern dienen kann. Pro Staurollenförderbahn sind zwei Förderketten vorgesehen, die zumindest auf der Oberseite in Führungen verlaufen und über Zahnräder im Kreis geführt werden.

Erfindungsgemäß wird unter Förderketten ein Förderstrang verstanden, der Staurollen integriert enthält. Ein solcher Förderstrang kann als Förderkette vorliegen, aber auch als Zahnriemen.

Es versteht sich, dass die Förderketten einer jeder Staurollenförderbahn synchron antreibbar sind.

Erfindungsgemäß wirkt der Motor einer jeden Staurollenförderbahn alternativ auf eine motorseitige oder eine endständige Antriebswelle. Zum Einfördern von Staugut wird die motorseitige Antriebswelle angetrieben, zum Ausfördern des Stauguts die endständige. Dies bedeutet, dass die Förderketten jeweils unter Zug bewegt werden. Der Antrieb der Förderketten nur unter Zug vermeidet das "Flattern" des Obertrums beim Ausfördern von Staugut. Dieses "Flattern" hat einen erhöhten Verschleiß zur Folge und kann dazu führen, dass die Förderkette aus der Führung oder von den Antriebszahnrädern springt. Eine Bewegung unter Zug bewirkt immer, dass das Leertrum auf der Unterseite ist.

Die Begriffe "motorseitig" und "endständig" sind so zu verstehen, dass die jeweilige Antriebswelle in der Nähe des Motors angeordnet ist, d.h. am Ende der Einförderstrecke, und am anderen Ende der Förderstrecke, d.h. am Ende der Ausförderstrecke bzw. am offenen Ende des Sattelaufliegers oder Containers.

Die endständige oder endseitige Antriebswelle wird dabei, wie auch die motorseitige Antriebswelle, über einen separaten Antriebsstrang angetrieben, der beim Ausfördern ebenfalls auf Zug geschaltet ist, wodurch die Förderkette in Ausförderrichtung unter Zugspannung bleibt. Der separate Antriebsstrang ist als Antriebskette, Keilriemen oder Zahnriemen ausgebildet. Es versteht sich, dass die Kräfte auch über Wellen übertragen werden können.

Wie schon ausgeführt, sind die Motoren des Staurollenkettenförderers so ausgelegt, dass die Förderketten in beide Richtungen bewegt werden können, also Ein- und Ausfördern können. Ist nur ein Motor vorhanden, dreht dieser in beide Richtungen, bei zwei Motoren kann jeweils ein Motor für das Ein- bzw. Ausfördern zuständig sein. Bei dem erfindungsgemäßen in beide Richtungen drehenden Motor ist dieser mit zwei Vorgelegen verbunden, von denen eines für das Einfördern von Staugut und das andere für das Ausfördern von Staugut eingerichtet ist. Das jeweils nicht benötigte Vorgelege wird deaktiviert. Erfindungsgemäß weisen die Vorgelege einen Freilauf auf, der beim Einfördern von Staugut den ausfördernden Strang freischaltet. Beim Ausfördern wird der einfördernde Strang frei geschaltet.

Die Motoren wirken über die Vorgelege und Antriebsstränge und auf die Antriebswellen der Förderketten, die sich für das Einfördern am motorseitigen Ende der Fördereinrichtung befinden und für das Ausfördern endseitig angeordnet sind. Damit bestehen für die Förderketten zwei unabhängige Antriebsstränge, von denen der für das Einfördern kurz gehalten werden kann, da sich die Antriebswelle in der Nähe des Motors befindet und diejenige für das Ausfördern über die Länge der Einrichtung zur endseitigen Antriebswelle läuft und die dortige Antriebswelle antreibt. Hierdurch ist gewährleistet, dass die Förderketten jeweils unter Zug bewegt werden. Für den Antrieb der Antriebswellen kommen herkömmliche Formen der Kraftübertragung in Frage, beispielsweise über Antriebsketten, Zahnriemen, Keilriemen, Wellen oder dergleichen.

Die Förderketten werden synchron über die Antriebswellen angetrieben und verlaufen zumindest mit ihrem Obertrum in Führungen.

Wie schon ausgeführt, sind die Förderketten einer Bahn über zwei gemeinsame Antriebswellen und Zahnräder miteinander verkoppelt. Von diesen Antriebswellen ist jeweils eine motorseitig und eine endseitig angeordnet. Dabei ist es sinnvoll, die Zahnräder zu mindestens einer Antriebswelle gegeneinander verstellbar auszulegen, um Kettenlängenveränderungen der Förderketten auszugleichen. Zweckmäßigerweise - aufgrund der besseren Zugänglichkeit - weist die endseitige Antriebswelle eine solche Verstellmöglichkeit auf.

Zum Ausgleich von Kettenlängenveränderungen weist die erfindungsgemäße Staurollenfördereinrichtung vorzugsweise Spannvorrichtungen auf. Eine solche Spannvorrichtung ist zweckmäßigerweise endseitig an jeder Förderkette angeordnet und erlaubt eine einfache Nachjustierung der Kettenspannung durch Verlagerung der endseitigen Antriebsachse, zweckmäßigerweise jedoch von Umlenkrollen, um die die Förderketten endseitig herumgeführt werden. Mit solchen Spannvorrichtungen ist eine Justierung der Kettenspannung ohne weiteres möglich.

Daneben stellt sich das Problem der ungleichen Kettenlängenveränderung der Förderketten einer Staurollenförderbahn.

Förderketten, gleich welcher Bauart, haben die Tendenz, sich unter Belastung zu längen. Diese Längung muss ausgeglichen werden, damit die Kette nicht das Antriebsrad überspringt. Tatsächlich ist die Längung einer Förderkette aber individuell bestimmt, d.h. die beiden Förderketten einer Staurollenförderbahn längen sich nicht gleichmäßig. Dadurch entstehen Diskrepanzen in den Kettenspannungen, deren Ausgleich zweckmäßig ist. Erfolgt ein solcher Ausgleich nicht, bekommt die stärker gelängte Förderkette in ihrer Führung zu viel Spiel.

Ein Ausgleich mit einer Feineinstellung erfolgt vorzugsweise durch Verstellung der Antriebszahnräder einer Antriebswelle, dazu sind insbesondere die endseitigen Antriebswellen quer geteilt und durch einen Spannsatz miteinander verbunden, der es erlaubt, mit einfachen Werkzeugen die Antriebswelle zu trennen und die beiden Förderketten durch Verdrehen der jeweiligen Antriebszahnräder individuell unter Spannung zu setzen, bevor die beiden Seiten der Antriebswelle wieder miteinander verbunden werden.

Die erfindungsgemäße Staurollenfördereinrichtung kann somit zwei verschiedene Spannvorrichtungen aufweisen, mit der Kettenverlängerungen ausgeglichen werden können, wobei eine Grobjustierung durch eine Verschiebung der Antriebsachse oder der Umlenkrollen in Längsrichtung erfolgt und eine Feinjustierung durch Verstellen/Verdrehen der Antriebszahnräder.

Grundsätzlich ist es möglich, dass die Antriebszahnräder zugleich auch die Umlenkrollen für die im Kreis geführten Förderketten darstellen. In diesem Fall umlaufen die Förderketten die Antriebszahnräder und greifen über wenigstens die Hälfte des Umfangs ins Ritzel der Antriebszahnräder ein. Es ist allerdings zweckmäßig, separate Umlenkrollen vorzusehen, wie vorstehend schon angesprochen, um über die Verstellbarkeit der Umlenkrollen eine Justierung der Kettenspannung zu ermöglichen. In diesem Fall greift die Förderkette wenigstens mit ihrem Obertrum ins Ritzel der Antriebszahnräder ein. Dies ist für einen Antrieb der Förderketten völlig ausreichend. Es ist erforderlich, bei dieser Anordnung einen Kontakt des Untertrums der Förderkette mit dem Ritzel der Antriebszahnräder zu vermeiden, bspw. über entsprechende Führungen, die gleichzeitig auch zur Feinjustierung der Kettenspannung eingesetzt werden können. Hierzu ist beispielsweise unter wenigstens einem Antriebszahnrad einer Stauförderkette ein einstellbares Distanzelement angeordnet, dass den Kontakt des Untertrums der Förderketten mit den Antriebszahnrädern verhindert. Ein solches Distanzelement kann gleichzeitig zur Feinjustierung der Kettenspannung im Untertrum verwandt werden, wenn es verstellbar ausgelegt ist.

Die Förderketten verlaufen zumindest mit ihrem Obertrum in einer Führung. Eine solche Führung befindet sich zweckmäßigerweise auch über den Antriebszahnrädern, um ein Abspringen der Förderketten zu verhindern.

Die Staurollenfördereinrichtung bedarf einer regelmäßigen Wartung und einer Schmierung im Bereich der Antriebszahnräder. Um im Bereich der Antriebszahnräder herabtropfendes Öl oder Schmierfett aufzufangen, ist es sinnvoll, dort Auffangwannen anzuordnen.

Die Erfindung wird durch die anliegenden Abbildungen näher erläutert, wobei die dort dargestellten einzelnen Merkmale in jeder beliebigen Kombination zum Einsatz kommen können. Es zeigen
- Fig. 1:: einen erfindungsgemäßen Staurollenkettenförderer in perspektivischer Ansicht
- Fig. 2:: den Kettenförderer gemäß Fig. 1 in der Draufsicht;
- Fig. 3:: das motorseitige Ende des Kettenförderers von Fig. 1 und;
- Fig. 4:: den endseitigen Abschnitt des Kettenförderers von Fig. 1;

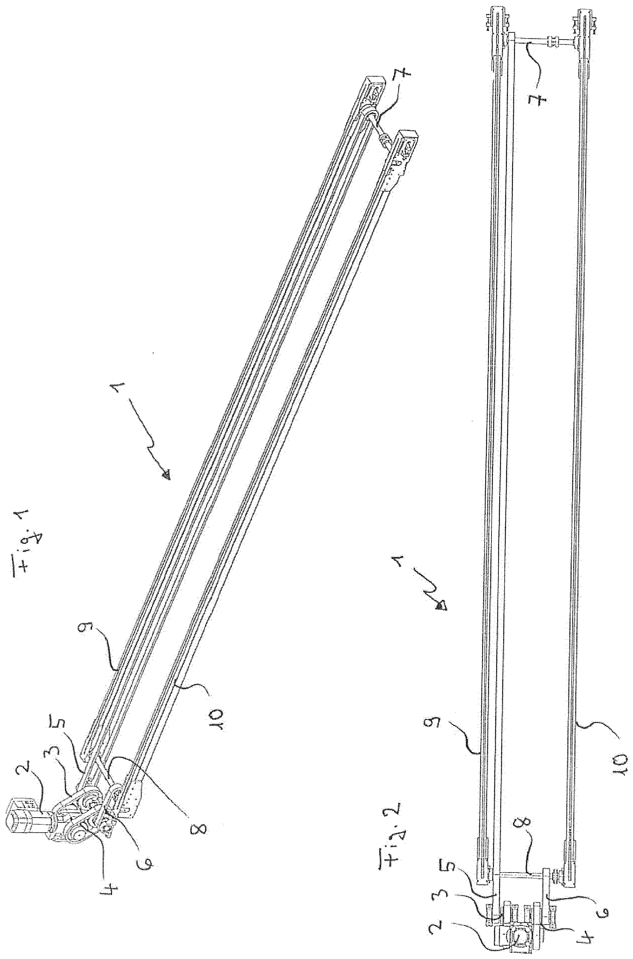

Fig. 1 zeigt einen erfindungsgemäßen Kettenförderer 1 in perspektivischer Ansicht. Der Kettenförderer 1 weist einen Motor 2 auf, der in beide Richtungen drehen kann und über zwei Vorgelege 3 und 4 die Antriebswellen 7 und 8 der Förderbahn antreibt. Über die Wellen 7 und 8 wiederrum werden die Förderketten in den Führungen 9 und 10 angetrieben.

Das Vorgelege 3 treibt mit seiner Antriebskette (schematisch dargestellt) über den Antriebsstrang 5, vorzugsweise ebenfalls eine Antriebskette, die endseitige Antriebswelle 7 an, die ihrerseits auf beide Förderketten in den Führungen 9 und 10 wirkt. Der Antrieb der beiden Förderketten erfolgt somit synchron.

Das Vorgelege 4 wirkt mit seiner Antriebskette auf den Antriebsstrang 6, vorzugsweise ebenfalls eine Antriebskette, für die motorseitige Antriebswelle 8, die ebenfalls auf beide Förderketten in den Führungen 9 und 10 wirkt. Das Vorgelege 4 überträgt die Motorkraft beim Einfördern auf die Förderbahn, das Vorgelege 3 beim Ausfördern. Wenn die motorseitige Antriebswelle 8 angetrieben wird, werden die Förderketten beim Einfördern auf Zug beansprucht; in diesem Fall befindet sich das Vorgelege 3 für das Ausfördern im Freilauf. Umgekehrt befindet sich bei Aktivierung des Vorgeleges 3 für das Ausfördern die Förderseite im Freilauf.

Die Förderbahn selbst wird durch den Verlauf der Förderketten in den Führungen 9 und 10 definiert.

Fig. 2 zeigt den Staurollenkettenförderer 1 von Fig. 1 in der Draufsicht mit dem Motor 2, den beiden Vorgelegen 3 und 4, den Antriebssträngen 5 und 6, den Antriebswellen 7 und 8 und den Führungen 9 und 10 für die Förderketten. Die Elemente mit den Bezugsziffern 4, 6, 8 und 10 dienen dem Einfördervorgang, diejenigen mit den Bezugsziffern 3, 5, 7 und 9 dem Ausfördervorgang. Der Motor 2 kann, je nach Bedarf und Förderrichtung des Stauguts, in beide Richtungen drehen.

Der Motor ist an der Stirnseite einer Förderbahn angeordnet. Bei mehreren in Serie geschalteten Förderbahnen befinden sich alle Motoren, sofern mehrere vorhanden sind, an der Stirnseite in Einförderrichtung der letzten Förderbahn.

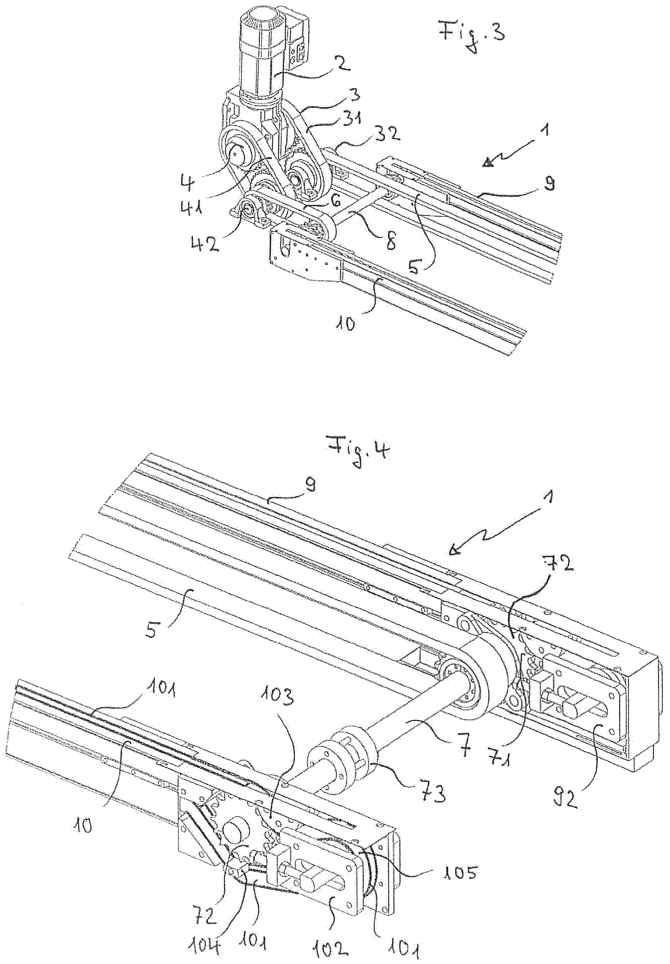

Fig. 3 zeigt das motorseitige Ende der erfindungsgemäßen Einrichtung gemäß Fig. 1 mit dem Motor 2 und den beiden Vorgelegen 3 und 4, die über Antriebsketten 31 und 42 die Wellen 32 und 42 antreiben. Welle 32 wiederum treibt die Antriebskette 5 an, die im Kreis zur endseitigen Antriebswelle 7 und zurück zur Antriebswelle 32 läuft. Das Vorgelege 4 mit der Antriebskette 41, der auf der Antriebswelle 42 wirkt, treibt wiederum die Antriebskette 6 an, die auf die motorseitige Antriebswelle 8 wirkt, die ihrerseits die beiden Förderketten innerhalb der Führungsschienen 9 und 10 antreibt. In der gezeigten Ausführungsform erfolgt der Antrieb jeweils über Zahnräder, Antriebsketten und Förderketten.

Fig. 4 zeigt die endseitige Antriebswelle 7 und das ausförderseitige Ende der Staurollenförderbahn. In den beiden Führungen 9 und 10 verlaufen die Förderketten (schematisch dargestellt für die Führung 10 mit der Bezugsziffer 101), die über die Zahnräder 71 und 72 geführt, die im Falle des Ausförderns von Staugut über den Antriebsstrang 5 und die Antriebswelle 7 angetrieben werden. Das Obertrum der Förderketten (schematisch dargestellt 101) bleibt damit beim Ausfördern unter Zugspannung.

Die Antriebswelle 7 weist eine Spannvorrichtung 73 auf, die es erlaubt, die Antriebswelle 7 zu teilen, zu justieren und die beiden Teile erneut aneinander zu fixieren, um einen Synchronlauf der Förderketten unter gleichbleibender Zugspannung zu ermöglichen.

Die Staurollenförderbahn weist für jede Förderkette eine Spannvorrichtung 92 bzw. 102 auf, die es erlaubt, die Längung der Förderketten auszugleichen. Jede der beiden Spannvorrichtungen 92 und 102 wirkt auf die ihr zugeordnete Förderkette und weist als Teil der Stellvorrichtung eine Umlenkrolle 105 auf, das die Laufrichtung der jeweiligen Förderkette umkehrt. Die Förderketten werden wie schon angesprochen, im Kreis geführt. Jede Spannvorrichtung 92, 102 wirkt auf die Achse der Umlenkzahnräder, die, entsprechend der Längung der Förderketten, verstellt werden können.

Teil der dargestellten Staurollenfördereinrichtung sind auch unterhalb der Antriebszahnräder 71 und 72 angeordnete Distanzelemente (dargestellt nur 104), die dazu dienen, die Förderkette im Abstand an den Ritzeln der Zahnräder 71 und 72 vorbeizuführen.

Die Staurollenförderketten, die in der erfindungsgemäßen Einrichtung zum Einsatz kommen, sind im Übrigen von herkömmlicher Machart, wie sie vielfach in der Literatur beschrieben werden. Sie erlauben es, dass eingeförderte Staugut zum motorseitigen Ende der Einrichtung durchzufördern und dort zum Anschlag zu bringen, wobei das sukzessiv eingeförderte Staugut jeweils an das vorher eingeförderte Staugut anschließt. Beim Ausfördern ist es ohne weiteres möglich, die Staurollenfördereinrichtung an eine entsprechende Fördereinrichtung am Abgabeort anzuschließen, so dass das Staugut dort in einen Produktions- oder Montageprozess eingespeist werden kann.

## Patentansprüche

1. Staurollenkettenförderer, insbesondere für Sattelauflieger, mit wenigstens einer Staurollenförderbahn, wenigstens einem in beide Richtungen drehenden Motor (2) für jede Staurollenförderbahn und zwei Förderketten pro Staurollenförderbahn, wobei die Förderketten jeder Staurollenförderbahn zumindest auf der Oberseite in Führungen (9,10) verlaufen, über Zahnräder angetrieben im Kreis geführt werden und synchron antreibbar sind, wobei der Motor (2) einer jeden Staurollenförderbahn auf eine motorseitige (8) und eine endständige Antriebswelle (7) wirkt, wobei zum Einfördern des Stauguts die motorseitige Antriebswelle (8) angetrieben wird und zum Ausfördern des Stauguts die endständige, dergestalt, dass die Förderketten jeweils unter Zug bewegt werden, **dadurch gekennzeichnet, dass** der Motor (2) mit zwei Vorgelegen (3,4) verbunden ist, von denen eines (4) bei der Einförderung von Staugut die motorseitige Antriebswelle (8) antreibt und das andere (3) bei der Ausförderung die endständige Antriebswelle und die Vorgelege (3,4) jeweils einen Freilauf aufweisen, wobei die Verbindung zur einfördernden Antriebswelle (8) aufgehoben wird, wenn die Antriebswelle (7) für die Ausförderung von Staugut angetrieben wird und umgekehrt.

2. Staurollenkettenförderer nach Anspruch 1, **dadurch gekennzeichnet, dass** der oder jeder Motor (2) stirnseitig zur Staurollenförderbahn angeordnet ist.

3. Staurollenkettenförderer nach Anspruch 1 oder 2, **dadurch gekennzeichnet, dass** zwei oder mehr Staurollenförderbahnen in Reihe angeordnet sind.

4. Staurollenkettenförderer nach Anspruch 1, **dadurch gekennzeichnet, dass** jede Antriebswelle (7,8) über einen separaten Antriebsstrang (5,6) angetrieben wird.

5. Staurollenkettenförderer nach Anspruch 2, **dadurch gekennzeichnet, dass** die Antriebsstränge (5,6) Antriebsketten oder Zahnriemen sind

6. Staurollenkettenförderer nach Anspruch 1, **dadurch gekennzeichnet, dass** die Förderketten einer Staurollenförderbahn über zwei gemeinsame Antriebswellen (7,8) und daran angeordnete Zahnräder miteinander verkoppelt sind.

7. Staurollenkettenförderer nach Anspruch 6, **dadurch gekennzeichnet, dass** die Zahnräder (7) einer der Antriebswellen (7,8) gegeneinander verstellbar sind, um Kettenlängenveränderungen der Förderketten auszugleichen.

8. Staurollenkettenförderer nach Anspruch 7, **dadurch gekennzeichnet, dass** jeweils die Zahnräder (72) der endständigen Antriebswelle (7) gegeneinander verstellbar sind.

9. Staurollenkettenförderer nach Anspruch 7, **dadurch gekennzeichnet, dass** die Antriebswelle (7) quer geteilt und durch einen Spannsatz (73) miteinander verbunden sind.

10. Staurollenkettenförderer nach einem der vorstehenden Ansprüche, **gekennzeichnet durch** Umlenkrollen (105), die den Antriebszahnrädern (71,72) der endständigen Antriebswellen (7) nachgeschaltet sind und mit Spannvorrichtungen (102) für die Förderketten versehen sind.

11. Staurollenkettenförderer nach Anspruch 10, **dadurch gekennzeichnet, dass** die Förderketten jeweils wenigstens mit ihrem Obertrum ins Ritzel der Antriebszahnräder der endständigen Antriebswelle (7) eingreifen.

12. Staurollenkettenförderer nach Anspruch 11, **dadurch gekennzeichnet, dass** unter den Antriebszahnrädern (72) der endständigen Antriebswelle ein einstellbares Distanzelement (104) angeordnet ist, das den Kontakt des Untertrums der Förderketten mit den Antriebszahnrädern verhindert.

13. Staurollenkettenförderer nach einem der vorstehenden Ansprüche, **dadurch gekennzeichnet, dass** die Förderketten in einer unteren Führung verlaufen.

14. Staurollenkettenförderer nach einem der vorstehenden Ansprüche, **gekennzeichnet durch** Ölauffangwannen unter den Antriebszahnrädern der Antriebswellen (7,8).

15. Trailer mit wenigstens einem Staurollenkettenförderer (1) nach einem der Ansprüche 1 bis 14.

## Claims

1. Accumulating roller chain conveyor, in particular for semi-trailers, having at least one accumulating roller conveyor track, at least one bi-directionally rotating motor (2) for each accumulating roller conveyor track, and two conveyor chains per accumulating roller conveyor track, wherein the conveyor chains of each accumulating roller conveyor track at least on the upper side run in guides (9, 10), are guided in a revolving manner so as to be driven by way of gear wheels, and are drivable in a synchronized manner, wherein the motor (2) of each accumulating roller conveyor track acts by way of a motor-proximal (8) and an end-proximal (7) drive shaft, wherein the motor-proximal drive shaft (8) is driven for the inward conveying of the cargo and the end-proximal drive shaft is driven for the outward conveying of the cargo in such a manner that the conveyor chains are in each case moved under tension, **characterized in that** the motor (2) is connected to two reduction gears (3, 4), one (4) of which driving the motor-proximal drive shaft (8) in the inward conveying of cargo, and the other (3) driving the end-proximal drive shaft in the outward conveying, and the reduction gears (3, 4) have in each case a freewheeling unit, wherein the connection to the inward-conveying drive shaft (8) is cancelled when the drive shaft (7) is driven for the outward conveying of cargo, and vice versa.

2. Accumulating roller chain conveyor according to Claim 1, **characterized in that** the or each motor (2) is disposed so as to be frontal on the accumulating roller chain conveyor track.

3. Accumulating roller chain conveyor according to Claim 1 or 2, **characterized in that** two or more accumulating roller chain conveyor tracks are disposed in series.

4. Accumulating roller chain conveyor according to Claim 1, **characterized in that** each drive shaft (7, 8) is driven by way of a separate drive train (5, 6) .

5. Accumulating roller chain conveyor according to Claim 2, **characterized in that** the drive trains (5, 6) are drive chains or timing belts.

6. Accumulating roller chain conveyor according to Claim 1, **characterized in that** the conveyor chains of one accumulating roller chain conveyor track are coupled to one another by way of two common drive shafts (7, 8) and gear wheels disposed thereon.

7. Accumulating roller chain conveyor according to Claim 6, **characterized in that** the gear wheels (7) of one of the drive shafts (7, 8) are mutually adjustable so as to compensate for variations in the length of the conveyor chains.

8. Accumulating roller chain conveyor according to Claim 7, **characterized in that** the gear wheels (72) of the end-proximal drive shaft (7) are in each case mutually adjustable.

9. Accumulating roller chain conveyor according to Claim 7, **characterized in that** the drive shafts (7) are transversely divided and connected to one another by a clamping set (73).

10. Accumulating roller chain conveyor according to one of the preceding claims, **characterized by** deflection rollers (105) which are disposed downstream of the drive gear wheels (71, 72) of the end-proximal drive shafts (7) and are provided with tensioning devices (102) for the conveyor chains.

11. Accumulating roller chain conveyor according to Claim 10, **characterized in that** the conveyor chains, at least by way of the upper run thereof, engage in each case in the sprocket of the drive gear wheels of the end-proximal drive shaft (7).

12. Accumulating roller chain conveyor according to Claim 11, **characterized in that** an adjustable spacer element (104) is disposed below the drive gear wheels (72) of the end-proximal drive shaft, said spacer element (104) preventing contact between the lower run of the conveyor chains and the drive gear wheels.

13. Accumulating roller chain conveyor according to one of the preceding claims, **characterized in that** the conveyor chains run in a lower guide.

14. Accumulating roller chain conveyor according to one of the preceding claims, **characterized by** oil collection trays below the drive gear wheels of the drive shafts (7, 8).

15. Trailer having at least one accumulating roller chain conveyor (1) according to one of Claims 1 to 14.

## Revendications

1. Transporteur à chaîne et à rouleaux d'accumulation, en particulier pour semi-remorques, comprenant au moins une bande transporteuse à rouleaux d'accumulation, au moins un moteur (2) tournant dans les deux sens, pour chaque bande transporteuse à rouleaux d'accumulation et deux chaînes de transport pour chaque bande transporteuse à rouleaux d'accumulation, les chaînes de transport de chaque bande transporteuse à rouleaux d'accumulation s'étendant, au moins sur le côté supérieur, dans des guides (9, 10), étant guidées en circuit fermé de manière entraînée par le biais de roues dentées et pouvant être entraînées de manière synchronisée, le moteur (2) de chaque bande transporteuse à rouleaux d'accumulation agissant sur un arbre d'entraînement côté moteur (8) et sur un arbre d'entraînement terminal (7), l'arbre d'entraînement côté moteur (8) étant entraîné pour l'approvisionnement des produits à accumuler, et l'arbre d'entraînement côté terminal étant entraîné pour le déchargement du produit à accumuler de telle sorte que les chaînes de transport soient déplacées à chaque fois en traction, **caractérisé en ce que** le moteur (2) est relié à deux arbres intermédiaires (3, 4), dont l'un (4), lors de l'approvisionnement du produit à accumuler, entraîne l'arbre d'entraînement côté moteur (8) et dont l'autre (3), lors du déchargement, entraîne l'arbre d'entraînement côté terminal, et les arbres intermédiaires (3, 4) présentant chacun une roue libre, la liaison à l'arbre d'entraînement d'approvisionnement (8) étant supprimée lorsque l'arbre d'entraînement (7) pour le déchargement du produit à accumuler est entraîné, et inversement.

2. Transporteur à chaîne et à rouleaux d'accumulation selon la revendication 1, **caractérisé en ce que** le ou chaque moteur (2) est disposé du côté frontal par rapport à la bande transporteuse à rouleaux d'accumulation.

3. Transporteur à chaîne et à rouleaux d'accumulation selon la revendication 1 ou 2, **caractérisé en ce que** deux ou plus de deux bandes transporteuses à rouleaux d'accumulation sont disposées en série.

4. Transporteur à chaîne et à rouleaux d'accumulation selon la revendication 1, **caractérisé en ce que** chaque arbre d'entraînement (7, 8) est entraîné par le biais d'une chaîne cinématique séparée (5, 6) .

5. Transporteur à chaîne et à rouleaux d'accumulation selon la revendication 2, **caractérisé en ce que** les chaînes cinématiques (5, 6) sont des chaînes d'entraînement ou des courroies dentées.

6. Transporteur à chaîne et à rouleaux d'accumulation selon la revendication 1, **caractérisé en ce que** les chaînes de transport d'une bande transporteuse à rouleaux d'accumulation sont accouplées l'une à l'autre par le biais de deux arbres d'entraînement communs (7, 8) et de roues dentées disposées sur ceux-ci.

7. Transporteur à chaîne et à rouleaux d'accumulation selon la revendication 6, **caractérisé en ce que** les roues dentées (7) de l'un des arbres d'entraînement (7, 8) peuvent être réglées l'une par rapport à l'autre pour compenser des variations de longueur de chaîne des chaînes de transport.

8. Transporteur à chaîne et à rouleaux d'accumulation selon la revendication 7, **caractérisé en ce que** les roues dentées (72) de l'arbre d'entraînement terminal (7) sont à chaque fois réglables l'une par rapport à l'autre.

9. Transporteur à chaîne et à rouleaux d'accumulation selon la revendication 7, **caractérisé en ce que** les arbres d'entraînement (7) sont divisés transversalement et sont connectés l'un à l'autre par un système de serrage (73).

10. Transporteur à chaîne et à rouleaux d'accumulation selon l'une quelconque des revendications précédentes, **caractérisé par** des poulies de renvoi (105) qui sont montées après les roues dentées d'entraînement (71, 72) des arbres d'entraînement terminaux (7) et qui sont pourvues de dispositifs de serrage (102) pour les chaînes de transport.

11. Transporteur à chaîne et à rouleaux d'accumulation selon la revendication 10, **caractérisé en ce que** les chaînes de transport s'engagent à chaque fois au moins avec leur tronçon supérieur dans le pignon des roues dentées d'entraînement de l'arbre d'entraînement terminal (7).

12. Transporteur à chaîne et à rouleaux d'accumulation selon la revendication 11, **caractérisé en ce qu'**un élément d'espacement ajustable (104) est disposé sous les roues dentées d'entraînement (72) de l'arbre d'entraînement terminal, lequel élément d'espacement empêche le contact du tronçon inférieur des chaînes de transport avec les roues dentées d'entraînement.

13. Transporteur à chaîne et à rouleaux d'accumulation selon l'une quelconque des revendications précédentes, **caractérisé en ce que** les chaînes de transport s'étendent dans un guide inférieur.

14. Transporteur à chaîne et à rouleaux d'accumulation selon l'une quelconque des revendications précédentes, **caractérisé par** des bacs de collecte d'huile sous les roues dentées d'entraînement des arbres d'entraînement (7, 8).

15. Remorque comprenant au moins un transporteur à chaîne et à rouleaux d'accumulation (1) selon l'une quelconque des revendications 1 à 14.
